# FASCICULE DE BREVET EUROPEEN

(11) **EP 3 779 611 B1**
(45) Date de publication et mention de la délivrance du brevet: **13.09.2023**
(21) Numéro de dépôt: 20184256.4
(22) Date de dépôt: 06.07.2020
(51) Int. Cl.: G04C 3/14, H02P 8/02

(54) **MONTRE ÉLECTROMÉCANIQUE**
ELEKTROMECHANISCHE ARMBANDUHR
ELECTROMECHANICAL WATCH

(30) Priorité: 15.08.2019 EP 19191930
(43) Date de publication de la demande: 17.02.2021
(73) Titulaire: ETA SA Manufacture Horlogère Suisse, 2540 Grenchen (CH)
(72) Inventeur: BESUCHET, Romain, 1400 Yverdon-les-Bains (CH)
(74) Mandataire: ICB SA

(56) Documents cités:
- EP-A1- 0 026 002
- EP-A1- 3 171 231
- JP-A- S61 180 599
- US-A1- 2015 085 625

## Description

### Domaine technique

La présente invention concerne les montres électromécaniques qui comprennent un affichage analogique et qui sont susceptibles de subir en cas de chocs des déplacements intempestifs de cet affichage analogique. En particulier, la présente invention concerne un système permettant de rendre de telles montres électromécaniques plus robustes en cas de chocs tout en permettant de détecter des pas intempestifs, c'est-à-dire des pas non commandés.

### Arrière-plan technologique

La problématique du risque de pas intempestifs en cas de chocs pour les montres électromécaniques est connue depuis longtemps et diverses solutions ont été apportées à ce problème.

Le document EP 1 693 720 propose un système dans lequel il est prévu de détecter un impact subi par une montre électromécanique au moyen d'une unité de détection d'impacts qui est reliée aux extrémités de la seule bobine du moteur pas-à-pas durant les intervalles de temps entre les impulsions motrices fournies au moteur. En effet, lorsqu'une aiguille bouge lors d'un choc, le mouvement du rotor à aimant permanent qui en résulte engendre un signal électrique dans la bobine que peut détecter l'unité de détection d'impacts. Suite à la détection d'un mouvement intempestif du rotor via le signal électrique engendré dans la bobine, il est prévu d'envoyer une impulsion électrique de blocage du rotor de manière à éviter que le moteur pas-à-pas effectue un ou plusieurs pas intempestifs. Cette solution présente plusieurs inconvénients. Premièrement, relier la bobine à un circuit de détection d'un signal électrique induit dans la bobine par un mouvement du rotor nécessite de conserver une impédance très élevée pour la bobine, dans laquelle aucun courant ne peut dès lors circuler. Ainsi, cette solution ne permet pas de bénéficier d'un amortissement d'un mouvement intempestif du rotor grâce à un courant induit par un tel mouvement durant les intervalles de temps intervenant entre les impulsions motrices. Dans cet état, le moteur électromécanique est donc vulnérable à des chocs ou autres accélérations brusques que peut subir la montre, même s'il peut alors détecter de tels événements lorsque ces derniers engendrent des mouvements intempestifs de l'affichage analogique et donc du rotor qui est relié mécaniquement à cet affichage analogique. Deuxièmement, le système prévoit de détecter si la montre subit un choc et ensuite de réagir à cette information en générant une impulsion de blocage du rotor. Ainsi, il est possible que la réaction soit trop tardive et/ou insuffisante pour empêcher que le moteur effectue au moins un pas non désiré. De plus, si l'impulsion de blocage ne parvient pas à empêcher un pas intempestif, cette impulsion de blocage engendre alors à son tour un second pas non désiré. Finalement, la génération d'impulsions de blocage peut consommer beaucoup d'énergie électrique. Si le seuil de détection est prévu relativement bas pour assurer une détection rapide et une réaction dans le meilleur délai, des impulsions de blocage sont alors générées souvent de sorte que l'autonomie de la montre électromécanique est diminuée.

Le document EP 3 171 231 décrit également un système du type proposé dans le document cité ci-avant. Il est prévu ici un circuit de détection de chocs qui est connecté à au moins une borne électrique du moteur électromécanique de manière à pouvoir détecter une tension induite dans la seule bobine du moteur pas-à-pas en cas de chocs subi par la montre qui engendrent un déplacement intempestif de l'affichage analogique, c'est-à-dire d'au moins un indicateur en lien cinématique avec le moteur pas-à-pas. Il est aussi prévu ici d'engendrer une impulsion de blocage suite à la détection d'un choc. Cette réalisation soulève les mêmes problèmes que ceux décrits en lien avec le document cité précédemment. On notera encore qu'un circuit de détection de chocs peut aussi être agencé pour détecter si un pas voulu n'a pas eu lieu, de sorte à pouvoir alors engendrer un pas de rattrapage.

On notera qu'il a été proposé un dispositif permettant de compter des pas intempestifs du moteur pas-à-pas ainsi que le sens de rotation du rotor lors de tels pas intempestifs. Suite à un choc ayant engendré un ou plusieurs pas non désirés du rotor, il est possible de corriger l'erreur engendrée dans l'affichage analogique de manière appropriée, soit par des pas de correction, soit, lorsque le sens de pas intempestifs est celui prévu pour l'entrainement de l'affichage analogique, en inhibant un nombre d'impulsions motrices correspondant au nombre de pas intempestifs via la commande du moteur qui engendre périodiquement des impulsions motrices pour entraîner l'affichage analogique. Avec une telle solution, il n'est plus nécessaire de bloquer électriquement le rotor par un signal électrique lors de la détection d'un choc et donc d'assurer une réaction suffisamment rapide et forte du circuit électronique de la montre. Cette solution présente l'avantage de ne pas limiter le balourd que peut présenter un indicateur formant l'affichage analogique. Cependant, ces moyens de comptabilisation de pas intempestifs via la détection d'un signal électrique induit dans la bobine du moteur empêche que le moteur pas-à-pas puisse passivement, de manière « naturelle », s'opposer à de tels pas intempestifs en cas de chocs ; ce qui augmente la consommation électrique de la montre électromécanique.

La demande de brevet EP 0026002 divulgue un moteur pas-à-pas monophasé muni de deux bobines. Selon l'enseignement de ce document, les deux bobines sont agencées en série pour engendrer de fortes impulsions permettant au rotor de tourner dans un premier sens, dit sens préférentiel, et en parallèle pour engendrer des impulsions permettant au rotor de tourner alors dans le sens inverse au sens préférentiel. Entre les impulsions servant à l'entraînement du rotor dans un sens ou l'autre, il est prévu de mettre les deux bobines en court-circuit pour freiner le rotor et ainsi limiter un nombre de pas intempestifs en cas de choc. Aucun circuit de détection de choc ou de pas intempestifs et aucun circuit de correction de tels pas intempestifs ne sont prévus. Selon la situation et le mode d'entraînement prévu, un pas intempestif et `naturellement suivi' d'un pas de correction ou de deux autres pas dans la mauvaise direction, pouvant ainsi laisser une erreur de trois pas suite à un choc.

### Résumé de l'invention

Le but de la présente invention est de remédier aux problèmes techniques susmentionnés.

A cet effet, l'invention concerne une montre électromécanique dont le moteur électromécanique est formé par un stator, comprenant un circuit magnétique et une première bobine traversée par ce circuit magnétique, et par un rotor muni d'un aimant permanent couplé au circuit magnétique, ce circuit magnétique définissant au moins une position d'énergie minimale pour le rotor qui est couplé mécaniquement à l'affichage analogique de la montre. La première bobine est agencée de manière à pouvoir, dans un mode de fonctionnement pas-à-pas du moteur électromécanique, être reliée à un circuit de détection de tension qui est agencé pour détecter une tension induite éventuelle dans cette première bobine durant des intervalles de temps intervenant entre les impulsions motrices fournies au moteur et notamment pour détecter si un pas non commandé est effectué par le rotor au cours de ces intervalles de temps. Ensuite, le moteur électromécanique comprend une deuxième bobine traversée par le circuit magnétique. De plus, la montre électromécanique comprend au moins un interrupteur qui est commandé par le circuit électronique de commande, dans le mode de fonctionnement pas-à-pas du moteur électromécanique, de manière à relier au cours de chacun desdits intervalles de temps, l'une des première et deuxième bobines audit circuit de détection et à court-circuiter l'autre de ces première et deuxième bobines.

Dans une première variante principale, la montre électromécanique est agencée de manière que, au cours de tous lesdits intervalles de temps, la première bobine est reliée au circuit de détection de tension, et de manière que la deuxième bobine est court-circuitée.

Dans une deuxième variante principale, le circuit de détection et un ensemble d'interrupteurs sont agencés de manière que chacune des première et deuxième bobines peut être reliée à au moins une partie du circuit de détection de tension.

Grâce aux caractéristiques de la montre électromécanique selon l'invention, on conserve une détection de pas intempestifs éventuels du rotor lors d'un choc via au moins une des première et deuxième bobines reliée au circuit de détection de tension, et en plus on bloque passivement le rotor via l'autre de ces deux bobines qui est court-circuitée en dehors des impulsions motrices. Ainsi, le nombre de pas intempestifs éventuels est fortement diminué en cas de choc et, si un tel pas intempestif devait néanmoins avoir lieu lors d'un choc, sa détection reste assurée ; ce qui permet, d'une part, de corriger ensuite l'erreur engendrée pour l'affichage analogique et, d'autre part, d'augmenter éventuellement encore la résistance du moteur au choc en générant une impulsion de blocage via une des deux bobines.

### Brève description des figures

L'invention sera décrite ci-après de manière plus détaillée à l'aide des dessins annexés, donnés à titre d'exemples nullement limitatifs, dans lesquels :
- La Figure 1 représente schématiquement un mode de réalisation d'une montre électromécanique selon l'invention, et
- La Figure 2 est un tableau donnant divers états d'un circuit de trois interrupteurs et les configurations résultantes pour les deux bobines formant le stator du moteur électromécanique de la montre de la Figure 1.

### Description détaillée de l'invention

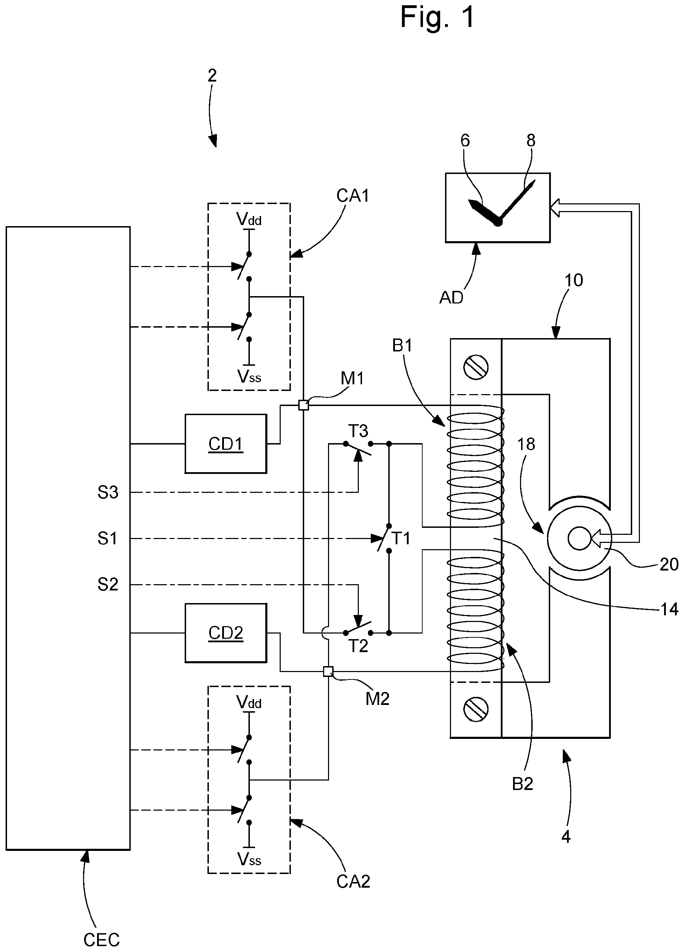

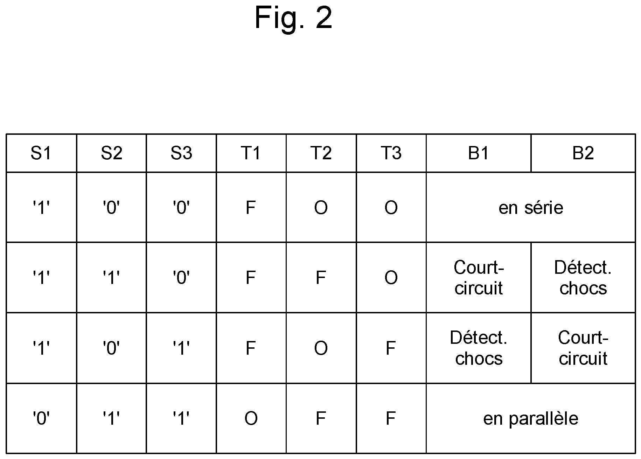

En référence aux Figures 1 et 2, on décrira par la suite un mode de réalisation d'une montre électromécanique 2 selon l'invention.

La montre électromécanique 2 comprend :
- un affichage analogique AD comprenant notamment une aiguille des heures 6 et une aiguille des minutes 8,
- un moteur électromécanique 4 formé d'un stator, comprenant un circuit magnétique 10 et une bobine B1 traversée par un noyau 14 formant le circuit magnétique, et d'un rotor 18 muni d'un aimant permanent 20 couplé magnétiquement au circuit magnétique, ce rotor étant couplé mécaniquement à l'affichage analogique,
- un circuit d'alimentation, représenté en deux parties CA1 et CA2, pour alimenter le moteur électromécanique, les deux parties du circuit d'alimentation étant reliées respectivement à une première borne électrique M1 et une deuxième borne électrique M2 du moteur électromécanique,
- un circuit électronique de commande du moteur électromécanique, ce circuit électronique de commande CEC étant agencé de manière que, dans un mode de fonctionnement pas-à-pas du moteur électromécanique, le circuit d'alimentation engendre sur commande des impulsions motrices présentant entre elles des intervalles de temps non nuls, et
- un circuit de détection de tension présentant, dans la variante représentée, deux parties CD1 et CD2 reliées respectivement aux première et deuxième bornes électriques M1 et M2, ce circuit de détection étant agencé pour pouvoir détecter une tension induite dans la bobine B1 durant lesdits intervalles de temps et notamment détecter, sur la base de cette tension induite, si un pas intempestif est effectué par le rotor 18 au cours de ces intervalles de temps.

Le moteur électromécanique 4 est du type pas-à-pas, le circuit magnétique 10 définissant pour le rotor 18 au moins une position d'énergie minimale vers laquelle le rotor, lorsqu'il est en mouvement, tourne en l'absence d'alimentation électrique et dans laquelle il demeure en l'absence d'alimentation électrique, c'est-à-dire en l'absence d'impulsions motrices fournies sur commande par le circuit d'alimentation. Chaque position d'énergie minimale définit une position stable pour le rotor en l'absence d'alimentation électrique, nommée aussi 'position de repos'. Ainsi, il est possible de détecter, via la tension induite dans la bobine B1, durant les intervalles de temps entre les impulsions motrices si le rotor tourne depuis une position de repos dans laquelle il se trouve momentanément.

Plusieurs documents de l'art antérieur, notamment ceux cités dans l'arrière-plan technologique, décrivent diverses réalisations pour le circuit de détection d'un signal électrique induit dans une bobine du moteur pas-à-pas d'une montre électromécanique et pour le traitement du signal électrique induit détecté en vue de déterminer si au moins un pas intempestif, c'est-à-dire non commandé, a eu lieu entre deux impulsions motrices destinées à faire fonctionner le moteur pas-à-pas. Ces documents de l'art antérieur décrivent également, comme indiqué précédemment, diverses réactions possibles pour éviter qu'un pas intempestif soit effectué dès qu'une rotation non commandée est détectée et/ou pour compter des pas intempestifs et le sens de rotation correspondant de manière à corriger ensuite l'erreur qui en résulte pour l'affichage analogique. Ces diverses réalisations et réactions possibles peuvent être implémentées dans les circuits CA1 & CA2 de détection d'une tension induite dans une bobine et dans le circuit électronique de commande CEC. On notera que, dans une variante, seule une des deux bornes électriques M1, M2 est reliée au circuit de détection d'une tension induite, lequel comprend alors une seule partie CD1 ou CD2.

Selon l'invention, le stator du moteur électromécanique comprend en outre une bobine B2 traversée par le circuit magnétique 10, en particulier par le noyau 14 comme représenté à la Figure 1. Ensuite, de manière générale, la montre électromécanique 2 comprend au moins un interrupteur qui est commandé par le circuit électronique de commande CEC de manière à court-circuiter la bobine B2 au cours de chacun desdits intervalles de temps dans le mode de fonctionnement pas-à-pas du moteur électromécanique 4. On notera que, dans une autre configuration du moteur électromécanique, la bobine B2 peut être traversée par un deuxième noyau du circuit magnétique. Comme l'aimant permanent du rotor est couplé magnétiquement au circuit magnétique, cet aimant permanent est couplé magnétiquement aux deux bobines B1 & B2 par les deux noyaux respectifs.

Dans le mode de réalisation préféré décrit en référence aux figures, la montre électromécanique comprend une pluralité d'interrupteurs T1, T2 et T3 qui sont agencés et commandés par le circuit électronique de commande CEC de manière que la bobine B1 et la bobine B2 peuvent être agencées durant les impulsions motrices soit en série, soit en parallèle. De plus, durant lesdits intervalles de temps entre les impulsions motrices, il est possible de soit court-circuiter la bobine B2 et de détecter la tension dans la bobine B1, soit de court-circuiter la bobine B1 et de détecter la tension dans la bobine B2. Le tableau donné à la Figure 2 fournit pour divers états utiles des trois interrupteurs T1, T2 et T3, commandés respectivement par trois signaux digitaux S1, S2 et S3 générés par le circuit électronique de commande CEC, les configurations correspondantes des bobines B1 et B2. Ainsi, la bobine reliée durant lesdits intervalles de temps au circuit de détection de tension est soit la bobine B1, soit la bobine B2, et la bobine court-circuitée lors de ces intervalles de temps est respectivement soit la bobine B2, soit la bobine B1. Un interrupteur fermé (noté 'F') est passant alors qu'un interrupteur ouvert (noté 'O') est non passant.

Dans une variante susmentionnée, seule une des deux bobines peut être reliée à un circuit de détection CD, formé par l'une ou l'autre des deux parties CD1 et CD2 d'un tel circuit de détection représenté à la Figure 1. Dans cette variante, au cours des intervalles de temps entre les impulsions motrices, la bobine pouvant être reliée à un circuit de détection CD est reliée à cette bobine et l'autre bobine est mise en court-circuit pour freiner tout mouvement non commandé du rotor au cours desdits intervalles de temps, et ainsi éviter des pas intempestifs ou limiter leur nombre.

La configuration des bobines B1 et B2 en série est utilisée de préférence lors de l'application des impulsions motrices au moteur électromécanique dans un mode de fonctionnement pas-à-pas normal, cette configuration en série permettant de minimiser l'énergie électrique consommée. La configuration des bobines B1 et B2 en parallèle est utilisée de préférence lors de l'application d'impulsions motrices au moteur électromécanique dans un mode de fonctionnement accéléré, c'est-à-dire à relativement haute vitesse, notamment lors d'une mise à l'heure ou d'une opération de correction de l'affichage analogique AD. On remarquera qu'on peut aussi prévoir, si souhaité, de n'alimenter qu'une seule des deux bobines lors de certaines impulsions motrices fournies au moteur électromécanique.

## Revendications

1. Montre électromécanique (2) comprenant :
- un affichage analogique (AD),
- un moteur électromécanique (4) formé d'un stator, comprenant un circuit magnétique (10) et une bobine (B1) traversée par ce circuit magnétique, et d'un rotor (18) muni d'un aimant permanent (20) couplé au circuit magnétique, ce circuit magnétique définissant au moins une position d'énergie minimale pour le rotor, ce rotor étant couplé mécaniquement à l'affichage analogique,
- un circuit d'alimentation (CA1, CA2) pour alimenter le moteur électromécanique, ce circuit d'alimentation étant relié à une première borne électrique (M1) et une deuxième borne électrique (M2) de ce moteur électromécanique,
- un circuit électronique de commande du moteur électromécanique, ce circuit électronique de commande (CEC) étant agencé de manière que, dans un mode de fonctionnement pas-à-pas du moteur électromécanique, le circuit d'alimentation engendre sur commande des impulsions motrices présentant entre elles des intervalles de temps non nuls, et
- un circuit de détection de tension (CD1, CD2) agencé pour pouvoir détecter une tension induite dans ladite bobine (B1) durant lesdits intervalles de temps et notamment détecter, sur la base de cette tension induite, si un pas est effectué par le rotor (18) au cours de ces intervalles de temps ; **caractérisée en ce que** ladite bobine est une première bobine (B1) et le stator du moteur électromécanique comprend en outre une deuxième bobine (B2) traversée par ledit circuit magnétique (10) ; et **en ce que** la montre électromécanique comprend au moins un interrupteur (T1, T2, T3) qui est commandé par le circuit électronique de commande (CEC), dans le mode de fonctionnement pas-à-pas du moteur électromécanique, de manière à relier, au cours de chacun desdits intervalles de temps, l'une quelconque des première et deuxième bobines audit circuit de détection de tension et à court-circuiter l'autre de ces première et deuxième bobines.

2. Montre électromécanique (2) selon la revendication 1, **caractérisée en ce qu'**elle est agencée de manière que, au cours de tous lesdits intervalles de temps, la première bobine est reliée audit circuit de détection de tension et la deuxième bobine est court-circuitée.

3. Montre électromécanique (2) selon la revendication 1, **caractérisée en ce que** le circuit de détection et un ensemble d'interrupteurs (T2, T3) sont agencés de manière que chacune des première et deuxième bobines peut être reliée à au moins une partie (CD1, CD2) du circuit de détection de tension.

4. Montre électromécanique selon une quelconque des revendications précédentes, **caractérisée en ce qu'**elle comprend une pluralité d'interrupteurs (T1, T2, T3) agencés et commandés par le circuit électronique de commande (CEC) de manière que les première et deuxième bobines (B1 & B2) peuvent être agencées soit en série, soit en parallèle durant les impulsions motrices.

## Patentansprüche

1. Elektromechanische Uhr (2), bestehend aus:
- eine analoge Anzeige (AD),
- einen elektromechanischen Motor (4), der aus einem Stator mit einem Magnetkreis (10) und einer Spule (B1), die von diesem Magnetkreis durchquert wird, und aus einem Rotor (18) besteht, der mit einem Dauermagneten (20) versehen ist, der mit dem Magnetkreis gekoppelt ist, wobei dieser Magnetkreis mindestens eine Mindestenergieposition für den Rotor definiert und dieser Rotor mechanisch mit der Analoganzeige gekoppelt ist,
- eine Stromversorgungsschaltung (CA1, CA2) zur Versorgung des elektromechanischen Motors, wobei diese Stromversorgungsschaltung mit einem ersten elektrischen Anschluss (M1) und einem zweiten elektrischen Anschluss (M2) dieses elektromechanischen Motors verbunden ist,
- eine elektronische Schaltung zur Steuerung des elektromechanischen Motors, wobei diese elektronische Steuerschaltung (CEC) so angeordnet ist, dass die Stromversorgungsschaltung in einem Schrittbetrieb des elektromechanischen Motors auf Befehl Antriebsimpulse erzeugt, zwischen denen Zeitintervalle ungleich Null liegen, und
- eine Spannungserfassungsschaltung (CD1, CD2), die so angeordnet ist, dass sie in der Lage ist, eine in der Spule (B1) während der Zeitintervalle induzierte Spannung zu erfassen und insbesondere auf der Grundlage dieser induzierten Spannung zu erfassen, ob der Rotor (18) während dieser Zeitintervalle einen Schritt macht;
**dadurch gekennzeichnet, dass** die genannte Spule eine erste Spule (B1) ist und der Stator des elektromechanischen Motors außerdem eine zweite Spule (B2) umfasst, die von dem genannten Magnetkreis (10) durchlaufen wird; und dass die elektromechanische Uhr mindestens einen Schalter (T1, T2, T3) umfasst, der von der elektronischen Steuerschaltung (CEC) im Schrittbetrieb des elektromechanischen Motors gesteuert wird, um während jedes der genannten Zeitintervalle eine der ersten und zweiten Spulen mit der Spannungserfassungsschaltung zu verbinden und die andere dieser ersten und zweiten Spulen kurzzuschließen.

2. Elektromechanische Uhr (2) nach Anspruch 1, **dadurch gekennzeichnet, dass** sie so angeordnet ist, dass während aller Zeitintervalle die erste Spule mit der Spannungserfassungsschaltung verbunden ist und die zweite Spule kurzgeschlossen ist.

3. Elektromechanische Uhr (2) nach Anspruch 1, **dadurch gekennzeichnet, dass** die Erfassungsschaltung und ein Satz von Schaltern (T2, T3) so angeordnet sind, dass jede der ersten und zweiten Spulen mit mindestens einem Teil (CD1, CD2) der Spannungserfassungsschaltung verbunden werden kann.

4. Elektromechanische Uhr nach einem der vorhergehenden Ansprüche, **dadurch gekennzeichnet, dass** sie eine Vielzahl von Schaltern (T1, T2, T3) umfasst, die von der elektronischen Steuerschaltung (CEC) so angeordnet und gesteuert werden, dass die erste und die zweite Spule (B1 und B2) während der Antriebsimpulse entweder in Reihe oder parallel angeordnet werden können.

## Claims

1. Electromechanical watch (2) comprising:
- an analogue display (AD),
- an electromechanical motor (4) formed by a stator, comprising a magnetic circuit (10) and a coil (B1) through which this magnetic circuit passes, and by a rotor (18) provided with a permanent magnet (20) coupled to the magnetic circuit, this magnetic circuit defining at least one minimum energy position for the rotor, this rotor being mechanically coupled to the analogue display,
- a power supply circuit (CA1, CA2) for supplying the electromechanical motor, this power supply circuit being connected to a first electrical terminal (M1) and a second electrical terminal (M2) of this electromechanical motor,
- an electronic circuit for controlling the electromechanical motor, this electronic control circuit (CEC) being arranged so that, in a stepping functioning mode of the electromechanical motor, the power supply circuit generates, on command, drive pulses having between them non-zero intervals of time, and
- a voltage detection circuit (CD1, CD2) arranged so as to be able to detect a voltage induced in said coil (B1) during said intervals of time and in particular to detect, on the basis of this induced voltage, whether a step is made by the rotor (18) during these intervals of time;
**characterised in that** said coil is a first coil (B1) and the stator of the electromechanical motor further comprises a second coil (B2) through which said magnetic circuit (10) passes; and **in that** the electromechanical watch comprises at least one switch (T1, T2, T3) that is controlled by the electronic control circuit (CEC), in the stepping functioning mode of the electromechanical motor, so as to connect, during each of said intervals of time, any one of the first and second coils to said voltage detection circuit and to short-circuit the other of these first and second coils.

2. Electromechanical watch (2) according to claim 1, **characterised in that** it is arranged so that, during all said intervals of time, the first coil is connected to said voltage detection circuit and the second coil is shortcircuited.

3. Electromechanical watch (2) according to claim 1, **characterised in that** the detection circuit and a set of switches (T2, T3) are arranged so that each of said first and second coils can be connected to at least one part (CD1, CD2) of the voltage detection circuit.

4. Electromechanical watch according to any one of the preceding claims, **characterised in that** it comprises a plurality of switches (T1, T2, T3) arranged and controlled by the electronic control circuit (CEC) so that the first and second coils (B1 and B2) can be arranged either in series or in parallel during the drive pulses.
